# EUROPEAN PATENT SPECIFICATION

(11) **EP 3 860 283 B1**
(45) Date of publication and mention of the grant of the patent: **19.02.2025**
(21) Application number: 18934901.2
(22) Date of filing: 27.09.2018
(51) Int. Cl.: H04W 72/12, H04W 72/04

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR, ET PROCÉDÉ DE COMMUNICATION SANS FIL

(43) Date of publication of application: 04.08.2021
(73) Proprietor: NTT DOCOMO, INC., Chiyoda-ku Tokyo 100-6150 (JP)
(72) Inventor: YOSHIOKA, Shohei, Tokyo 100-6150 (JP); TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/036144
(87) International publication number: WO 2020/065893

(56) References cited:
- EP-A1- 3 528 527
- WO-A1-2018/070087
- WO-A1-2018/142376
- US-A1- 2018 176 937
- SAMSUNG: "Multiplexing of UL Transmissions with Different Reliability Requirements", vol. RAN WG1, no. Athens, Greece; 20180226 - 20180302, 16 February 2018 (2018-02-16), XP051397111, Retrieved from the Internet <URL:http://www.3gpp.org/ftp/tsg%5Fran/WG1%5FRL1/TSGR1%5F92/Docs/> [retrieved on 20180216]
- INSTITUTE FOR INFORMATION INDUSTRY (III): "Intra-UE UL multiplexing with different reliability requirements", vol. RAN WG1, no. Busan, Korea; 20180521 - 20180525, 20 May 2018 (2018-05-20), XP051442338, Retrieved from the Internet <URL:http://www.3gpp.org/ftp/Meetings%5F3GPP%5FSYNC/RAN1/Docs/> [retrieved on 20180520]
- MITSUBISHI ELECTRIC: "Discussions on intra-UE multiplexing between URLLC and eMBB", 3GPP TSG-RAN WG1 MEETING #93 RL-1807294, 12 May 2018 (2018-05-12), pages 1 - 4, XP051442490, Retrieved from the Internet <URL:http://www.3gpp.org/ftp/tsg_ran/WG1_RL1/TSGR1_93/Docs/R1-1807294.zip> [retrieved on 20181119]
- PANASONIC: "On BWP hopping for repetitions and retransmission in NR URLLC", 3GPP TSG-RAN WG1 MEETING #94 RL-1808828, 10 August 2018 (2018-08-10), pages 1 - 2, XP051516201, Retrieved from the Internet <URL:http://www.3gpp.org/ftp/tsg_ran/WG1RL1/TSGR1_94/Docs/Rl-1808828.zip> [retrieved on 20181119]

## Description

### Technical Field

The present disclosure relates to a user terminal and a radio communication method in next-generation mobile communication systems.

### Background Art

In the universal mobile telecommunications system (UMTS) network, the specifications of long term evolution (LTE) have been drafted for the purpose of further increasing high speed data rates, providing lower delays, and the like (see Non Patent Literature 1). Further, the specifications of LTE Advanced (LTE-A, 3GPP Rel. 10, 11, 12, 13, 14) have been drafted for the purpose of further increasing the capacity and advancement of LTE (3GPP Rel. 8, 9) .

Successor systems of LTE (for example, future radio access (FRA), 5th generation mobile communication system (5G), 5G+ (plus), new radio (NR), new radio access (NX), future generation radio access (FX), LTE Rel. 14 or 15 or later releases, and the like) are also under study.

In the existing LTE system, the user terminal controls transmission of an uplink shared channel (for example, physical uplink shared channel (PUSCH)) based on downlink control information (DCI) (UL grant). The user terminal further controls transmission of an uplink control channel (for example, physical uplink control channel (PUCCH)) .

### Citation List

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non Patent Literature 2: SAMSUNG: "Multiplexing of UL Transmissions with Different Reliability Requirements", 3GPP DRAFT; R1-1802002 - MULTIPLEXING OF UL TRANSMISSIONS WITH DIFFERENT RELIABILITY REQUIREMENTS, 3RD GENERATION PARTNERSHIP PROJECT (3GPP), MOBILE COMPETENCE CENTRE; 650, ROUTE DES LUCIOLES vol. RAN WG1, no. Athens, Greece; 20180226 - 20180302 16 February 2018 (2018-02-16)
Non Patent Literature 3: INSTITUTE FOR INFORMATION INDUSTRY (III): "Intra-UE UL multiplexing with different reliability requirements", 3GPP DRAFT; R1-1807140 INTRA-UE UL MULTIPLEXING WITH DIFFERENT RELIABILITY REQUIREMENTS, 3RD GENERATION PARTNERSHIP PROJECT (3GPP), MOBILE COMPETENCE CENTRE; 650, ROUTE DES LUCIOLES, vol. RAN WG1, no. Busan, Korea; 20180521 - 20180525 20 May 2018 (2018-05-20)
Patent Literature 1: WO 2018/070087 A1

### Summary of Invention

### Technical Problem

NR is designed to allow a plurality of communications (a plurality of communications of different traffic types) associated with a plurality of services under different requirements (for example, ultra reliable and low latency communications (URLLC), enhanced mobile broad band (eMBB), and the like).

For example, a study is underway on stopping, when uplink transmission of a second traffic type (for example, URLLC) more stringent in requirements for at least either reliability or delay than a first traffic type (for example, eMBB) occurs, the uplink transmission of the first traffic type is stopped (stop) and performing the uplink transmission of the second traffic type using at least some of time/frequency domain resources scheduled for the uplink transmission of the first traffic type.

For example, Non Patent Literature 2 and Patent Literature 1 relate to methods of using a DCI to control the cancelling of an already scheduled PUSCH resource/transmission. Non Patent Literature 3 relates to multiplexing URLLC and eMBB over multiple time and frequency resources to avoid a collision.

However, how to stop the already scheduled uplink transmission of the first traffic type has not been fully studied. When the uplink transmission of the first traffic type fails to be stopped in a suitable manner, the requirements of the second traffic type may fail to be satisfied. A similar problem may arise when resources for the uplink transmission of the first traffic type configured in accordance with a higher layer parameter (for example, resources configured in accordance with a configured grant) conflict with resources for the uplink transmission of the second traffic type.

It is therefore an object of the present disclosure to provide a user terminal and a radio communication method capable of suitably controlling stopping of uplink transmission.

### Solution to Problem

The subject-matter of the independent claims solves the above technical problem/s. The dependent claims describe further preferred embodiments. A user terminal according to one aspect of the present disclosure includes a receiving section that receives first downlink control information, and a control section that controls, based on the first downlink control information, stopping of the uplink transmission that uses at least some of time and frequency domain resources determined based on second downlink control information received before the first downlink control information or a higher layer parameter.

### Advantageous Effects of Invention

According to one aspect of the present disclosure, it is possible to suitably control stopping of uplink transmission.

### Brief Description of Drawings

Figs. 1A to 1D are diagrams illustrating examples of first to third cancel operations based on UE-specific DCI according to a first aspect.
Figs. 2A to 2C are diagrams illustrating examples of the first to third cancel operations based on common DCI according to the first aspect.
Figs. 3A and 3B are diagrams illustrating examples of a first pause operation according to a second aspect.
Figs. 4A and 4B are diagrams illustrating examples of a second pause operation according to the second aspect.
Fig. 5 is a diagram illustrating an example of D/U slot handling according to the second aspect.
Figs. 6A to 6C are diagrams illustrating examples of a frequency domain resource change operation according to a modification of the second aspect.
Fig. 7 is a diagram illustrating an example of a schematic configuration of a radio communication system according to one embodiment.
Fig. 8 is a diagram illustrating an example of a configuration of a base station according to one embodiment.
Fig. 9 is a diagram illustrating an example of a configuration of a user terminal according to one embodiment.
Fig. 10 is a diagram illustrating an example of a hardware configuration of the base station and the user terminal according to one embodiment.

### Description of Embodiments

NR is designed to allow a UE to perform a plurality of communications (a plurality of communications of different traffic types) associated with a plurality of services under different requirements (for example, ultra reliable and low latency communications (URLLC), enhanced mobile broad band (eMBB), and the like).

For example, a study is underway on allowing, when uplink transmission of a second traffic type (for example, URLLC) more stringent in requirements for at least either reliability or delay than a first traffic type (for example, eMBB) occurs, the uplink transmission of the second traffic type to use at least either time domain resources or frequency domain resources (time/frequency domain resources) already scheduled for the uplink transmission of the first traffic type, so as to satisfy the requirements of the second traffic type.

Specifically, a study is underway on stopping, when the uplink transmission of the second traffic type occurs, the uplink transmission of the first traffic type and performing the uplink transmission of the second traffic type using at least some of the time/frequency domain resources scheduled for the uplink transmission of the first traffic type.

However, when the uplink transmission of the second traffic type occurs, how to stop the already scheduled uplink transmission of the first traffic type has not been fully studied. When the uplink transmission of the first traffic type fails to be stopped in a suitable manner, the requirements of the second traffic type may fail to be satisfied.

Therefore, the present inventors have studied a method for suitably controlling stopping of already scheduled uplink transmission of the first traffic type and, as a result, have come up with the present invention. Specifically, the present inventors have come up with an idea of suitably controlling the stopping of the already scheduled uplink transmission of the first traffic type by canceling, pausing, or re-scheduling the uplink transmission.

Hereinafter, an embodiment according to the present disclosure will be described in detail with reference to the drawings.

Note that, according to the present embodiment, the UE is supposed to control, when uplink transmission of the second traffic type (for example, URLLC of another UE) more stringent in requirements for at least either reliability or delay than the first traffic type (for example, eMBB) occurs, the stopping of its own uplink transmission of the first traffic type.

Note that the traffic type is not necessarily recognized in a lower layer (for example, the physical layer), and may be recognized based on other parameters. For example, a difference in traffic type may be recognized based on at least one of the following parameters:
- A plurality of logical channels with different priorities (for example, uplink shared channel (UL-SCH));
- A plurality of tables with different configuration values for modulation and coding scheme (MCS) (for example, MCS index table);
- A plurality of formats different in DCI (DCI format);
- A plurality of different radio network temporary identifiers (RNTIs) used for CRC scrambling DCI (for example, first RNTI (cell-RNTI (C-RNTI) or the like) and second RNTI (MCS-C-RNTI or the like));
- A value represented by a higher layer parameter;
- A plurality of search spaces; and
- A plurality of values represented by given fields in DCI (for example, new or existing fields).

Note that the CRC scrambling is to scramble (mask) the cyclic redundancy check (CRC) bits included in (added to) the DCI with given information (for example, RNTI).

Further, according to the present embodiment, the uplink transmission may include, for example, at least either PUSCH or PUCCH. The PUSCH may include at least either PUSCH scheduled by DCI (UL grant) or PUSCH configured by a higher layer parameter (configured grant).

Further, the PUCCH may include at least either PUCCH used for transmitting periodic uplink control information (UCI) or PUCCH used for transmitting aperiodic UCI. Further, according to the present embodiment, "cancel" and "drop" may be interchangeably used and may be replaced with each other.

### (First Aspect)

A description will be given, according to a first aspect, of how to cancel at least part of uplink transmission.

### <Cancel instruction (indication)>

DCI may include instruction information on cancellation of uplink transmission. The instruction information may be a value of at least one field in the DCI. Further, the DCI including the instruction information may be, for example, UE-specific DCI or DCI common to at least one UE (common DCI).

### <<UE-specific DCI>>

Instruction information in the UE-specific DCI may specify which uplink transmission should be canceled. For example, each uplink transmission scheduled by the base station is assigned a given number (identifier), and the instruction information may specify the number (identifier) assigned to uplink transmission to be canceled (for example, the number assigned to PUSCH or PUCCH to be canceled).

The instruction information in the UE-specific DCI may further specify which time/frequency domain resources should be canceled (emptied). For example, the instruction information may specify given time/frequency domain resources.

### <<Common DCI>>

Instructional information in the common DCI may specify which time/frequency domain resources should be canceled (emptied). In this case, the instruction information may specify given time/frequency domain resources.

### <Cancel operation (behavior)>

The UE controls the cancellation of uplink transmission based on the instruction information in the DCI (for example, the UE-specific DCI or the common DCI).

### <<Cancel operation based on UE-specific DCI>>

The UE may apply at least one of the following first to third cancel operations based on the UE-specific DCI.

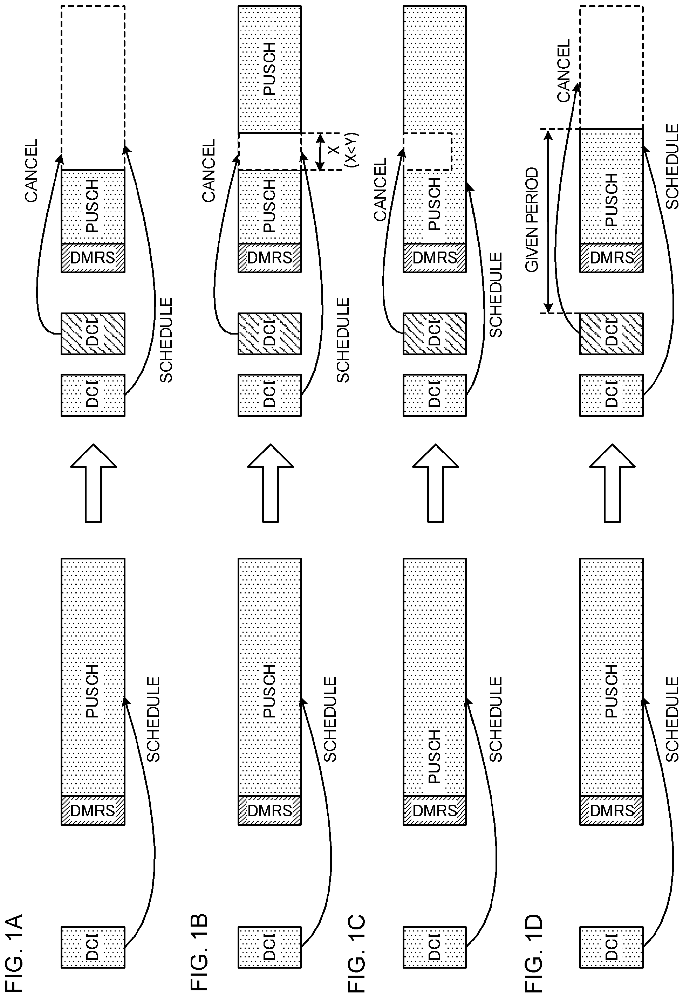

In the first cancel operation, the UE may cancel all remaining uplink transmission instructed by the instructional information in the UE-specific DCI (for example, as illustrated Fig. 1A).

Here, the remaining uplink transmission may be uplink transmission using at least some of the time domain resources scheduled or configured for uplink transmission. Alternatively, the remaining uplink transmission may be uplink transmission instructed by the DCI including the above-described instruction information. Alternatively, the remaining uplink transmission may be uplink transmission after a given symbol (for example, the first symbol or a symbol after a given number of symbols from the first symbol) in time domain resources, among the scheduled or configured time domain resources, instructed by the instruction information in the DCI. Alternatively, the remaining uplink transmission may be uplink transmission after a given symbol (for example, the first symbol or a symbol after a given number of symbols from the first symbol) in time domain resources, among the scheduled or configured time domain resources, instructed by the instruction information in the DCI, but excluding frequency domain resources instructed by the DCI.

In the second cancel operation, the UE may cancel part of the remaining uplink transmission instructed by the instruction information in the UE-specific DCI (for example, Fig. 1C). Specifically, the UE may cancel uplink transmission corresponding to the time/frequency domain resources instructed by the instruction information and perform uplink transmission corresponding to the other scheduled time/frequency domain resources.

In the third cancel operation, the UE may cancel uplink transmission that uses time domain resources satisfying a given condition (for example, Fig. 1D). The given condition may correspond to, for example, the elapse of a given period from the last symbol of the UE-specific DCI including the instruction information.

Which of the first to third cancel operations is applied to the UE may be given in the specification, or may be controlled based on the given condition. Specifically, the UE may control which of the first and second cancel operations is applied to the UE based on at least either whether the remaining uplink transmission has a demodulation reference signal (DMRS) (whether DMRS is located in the time/frequency domain resources corresponding to the remaining uplink transmission) or a time interval X between a symbol immediately before a symbol to which the cancel operation is applied and a symbol immediately after the time domain resources instructed by the DCI.

For example, the UE may apply the first cancel operation when the remaining uplink transmission specified by the instruction information in the UE-specific DCI has no DMRS, and apply the second cancel operation when the remaining uplink transmission has DMRS.

Further, when the interval X is greater than (or is equal to or greater than) a given threshold Y, the UE may apply the first cancel operation; whereas when the interval X is equal to or less than (or less than) the given threshold Y, the UE may apply the second cancel operation.

Here, the given threshold Y may be configured based on a higher layer parameter, or may be given in the specification. Further, the given threshold Y may be controlled based on the subcarrier spacing (SCS) or need not be controlled based on the SCS.

Figs. 1A to 1D are diagrams illustrating examples of the first to third cancel operations based on the UE-specific DCI according to the first aspect. In Figs. 1A to 1D, it is assumed that the UE transmits PUSCH using time/frequency domain resources scheduled (specified) by the DCI (UL grant such as DCI format 0_0 or 0_1).

As illustrated in Fig. 1A, the UE may cancel all remaining PUSCH transmission instructed by the instruction information in the UE-specific DCI. For example, in Fig. 1A, the first cancel operation is applied because the remaining PUSCH transmission has no DMRS. Note that the condition under which the first cancel operation is applied is not limited to the above condition.

Further, in Fig. 1B, the time interval X between the symbol immediately before the symbol to which the cancel operation is applied and the symbol immediately after the time domain resources instructed by the DCI is less than (or equal to or less than) the given threshold Y. This allows the UE to perform the remaining PUSCH transmission. Although not illustrated, when the time interval X is equal to or greater than (or greater than) the given threshold, the remaining PUSCH transmission need not be performed.

Further, as illustrated in Fig. 1C, the UE may cancel PUSCH transmission corresponding to time/frequency domain resources instructed by the instruction information in the UE-specific DCI and perform PUSCH transmission corresponds to the other scheduled time/frequency domain resources.

Further, as illustrated in Fig. 1D, the UE may cancel PUSCH that uses time domain resources satisfying the given condition (for example, resource in a range of from the last symbol of the UE-specific DCI to a symbol after the elapse of the given period), among PUSCHs instructed by the instruction information (for example, numbers assigned to the PUSCHs) in the UE-specific DCI.

Note that Figs. 1A to 1D illustrate the cancel operations on PUSCH transmission, but the present disclosure is not limited to such operations. It goes without saying that the first to third cancel operations based on the UE-specific DCI are applicable to the other uplink transmission such as PUCCH transmission.

### <<Cancel operation based on common DCI>>

The UE may apply at least one of the following first to third cancel operations based on the common DCI.

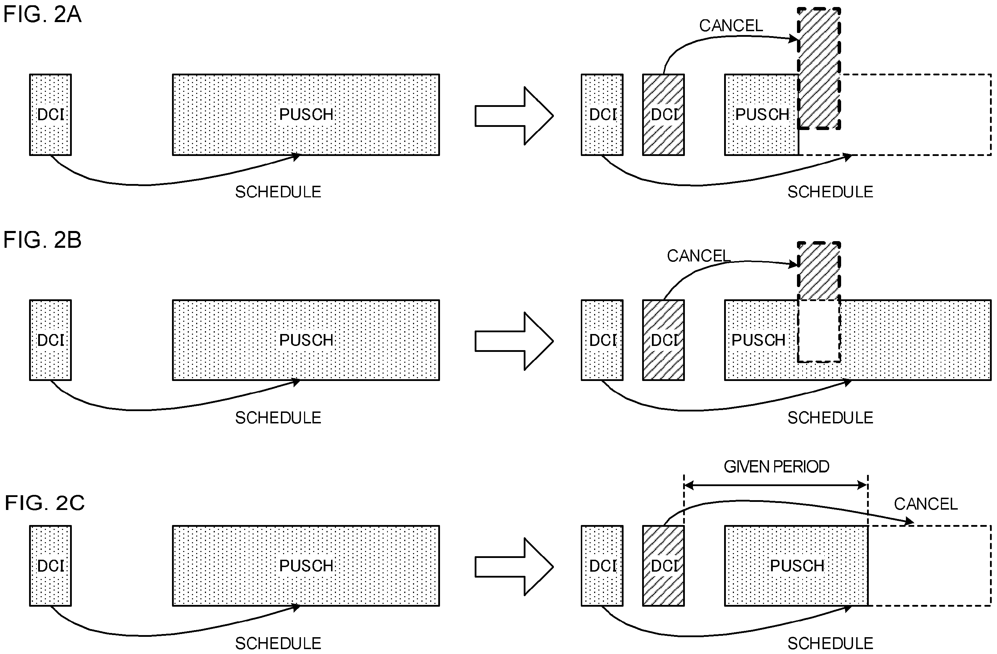

In the first cancel operation, the UE cancels all remaining uplink transmission that includes (and overlaps) at least some of the time/frequency resources instructed by the instructional information in the common DCI (for example, Fig. 2A).

In the second cancel operation, the UE may cancel part of the remaining uplink transmission instructed by the instruction information in the common DCI (for example, Fig. 2B). Specifically, the UE may cancel uplink transmission corresponding to (overlapping) the time/frequency domain resources specified by the instruction information and perform uplink transmission corresponding to the other scheduled time/frequency domain resources.

In the third cancel operation, the UE may cancel uplink transmission that uses time domain resources satisfying a given condition (for example, Fig. 2C). The given condition may correspond to, for example, the elapse of a given period from the last symbol of the UE-specific DCI including the instruction information.

Which of the first to third cancel operations is applied to the UE may be given in the specification, or may be controlled based on the given condition. Specifically, the UE may control which of the first and second cancel operations is applied to the UE under the same condition as in the cancel operations based on the UE-specific DCI.

Figs. 2A to 2C are diagrams illustrating examples of the first to third cancel operations based on the common DCI according to the first aspect. Figs. 2A to 2C primarily illustrate differences from Figs. 1A to 1C.

As illustrated in Fig. 2A, the UE may cancel all remaining uplink transmission that overlaps at least some of the time/frequency resources instructed by the instructional information in the common DCI.

Further, as illustrated in Fig. 2B, the UE may cancel PUSCH transmission corresponding to the time/frequency domain resources instructed by the instruction information in the common DCI and perform PUSCH transmission corresponds to the other scheduled time/frequency domain resources.

Further, as illustrated in Fig. 2C, the UE may cancel PUSCH that uses the time domain resources satisfying the given condition (for example, resources in a range of from the last symbol of the UE-specific DCI to a symbol after the elapse of the given period), among PUSCHs instructed by the instruction information (for example, numbers assigned to the PUSCHs) in the common DCI.

Note that Figs. 2A to 2C illustrate the cancel operations on PUSCH transmission, but the present disclosure is not limited to such operations. It goes without saying that the first to third cancel operations based on the UE-specific DCI are applicable to the other uplink transmission such as PUCCH transmission.

### <UCI handling>

A description will be given below of handling of UCI included in uplink transmission (for example, PUSCH or PUCCH) canceled based on the instruction information in the DCI (for example, the UE-specific DCI or the common DCI).

The UCI may include at least one of delivery acknowledgement information (hybrid automatic repeat request-acknowledge (HARQ-ACK), acknowledge/non-acknowledge (ACK/NACK)) for downlink shared channel (for example, physical downlink shared channel (PDSCH)), scheduling request (SR), or channel state information (CSI).

The UE may apply at least one of the following first to fourth UCI handlings.

In the first UCI handling, the UE may drop (or need not transmit) the UCI included in the canceled uplink transmission.

In the second UCI handling, the UE may retransmit (re-report) specific UCI included in the canceled uplink transmission and may drop (need not transmit) the other UCI. The specific UCI is, for example, HARQ-ACK.

The DCI may trigger a re-report of the HARQ-ACK. The DCI may be UE-specific DCI or common DCI including the above-described instruction information. The DCI may also specify time/frequency resources used for the re-report of the HARQ-ACK.

In the third UCI handling, the UE may transmit at least part of the UCI included in the canceled uplink transmission (for example, PUSCH) in another uplink transmission (for example, PUCCH).

For example, when PUSCH is canceled, the UE may transmit at least part of the UCI (for example, HARQ-ACK) included in the PUSCH using PUCCH. The UE may determine resources for the PUCCH based on at least either DCI or a higher layer parameter. The UE may drop the other UCI (for example, CSI) included in the PUSCH, or may transmit the other UCI using the PUCCH.

In the fourth UCI handling, when only part of the remaining uplink transmission (for example, PUSCH) is canceled based on the DCI (for example, Fig. 1B or Fig. 2B), the UE may re-map or postpone UCI included in the canceled uplink transmission (for example, PUSCH) to time/frequency domain resources for uplink transmission that has not been canceled (for example, PUSCH).

According to the first aspect, the UE can suitably control the cancellation of uplink transmission based on the instruction information in the DCI. As a result, uplink transmission of the first traffic type that has been already scheduled or configured can be canceled, and then uplink transmission of the second traffic type can be performed, thereby allowing the requirements of the second traffic type more stringent than the requirements of the first traffic type to be satisfied.

### (Second Aspect)

According to the second aspect, at least some of the time/frequency domain resources scheduled for uplink transmission is changed in at least either the time domain or the frequency domain. For example, changing time domain resources is referred to as a pause. Here, the pause may correspond to a case where uplink transmission is temporarily stopped and then resumed after the elapse of a given period, a case where uplink transmission is postponed, or the like.

### <Pause instruction>

The DCI may include instruction information on the pause of uplink transmission. The instruction information may be a value of at least one field in the DCI. Further, the DCI including the instruction information may be, for example, UE-specific DCI or common DCI.

### <<UE-specific DCI>>

The instruction information in the UE-specific DCI may specify which uplink transmission should be paused. For example, each uplink transmission scheduled by the base station is assigned a given number (identifier), and the instruction information may specify a number (identifier) assigned to uplink transmission to be paused (for example, a number assigned to PUSCH or PUCCH to be paused).

The instruction information may specify which uplink transmission and which part of the uplink transmission (for example, at least either which transport block (TB) or which code block group (CBG)) should be paused. Note that the CBG may include one or more code blocks (CB), and the TB may be made up of one or more CBGs.

The instruction information in the UE-specific DCI may further specify which time/frequency domain resources should be canceled (emptied). For example, the instruction information may specify given time/frequency domain resources.

The instruction information in the UE-specific DCI may further specify how long (for example, how many symbols or how many slots) the uplink transmission to be paused should be postponed. That is, the instruction information may specify a postponement period (for example, the number of symbols X or the number of slots X).

### <<Common DCI>>

The instruction information in the common DCI may specify which uplink transmission should be paused. For example, each uplink transmission scheduled by the base station is assigned a given number (identifier), and the instruction information may specify a number (identifier) assigned to uplink transmission to be paused (for example, a number assigned to PUSCH or PUCCH to be paused). The instruction information may further specify which uplink transmission and which part of the uplink transmission (for example, at least either which TB or which CBG) should be paused.

The instructional information in the common DCI may further specify which time/frequency domain resources should be canceled (emptied). For example, the instruction information may specify given time/frequency domain resources.

The instruction information in the common DCI may further specify how long (for example, how many symbols or how many slots) the uplink transmission to be paused should be postponed. That is, the instruction information may specify a postponement period (for example, the number of symbols X or the number of slots X).

### <Pause operation>

The UE controls the pause of uplink transmission based on the instruction information in the DCI (for example, the UE-specific DCI or the common DCI). Specifically, the UE may apply at least one of the following first to third pause operations based on the DCI.

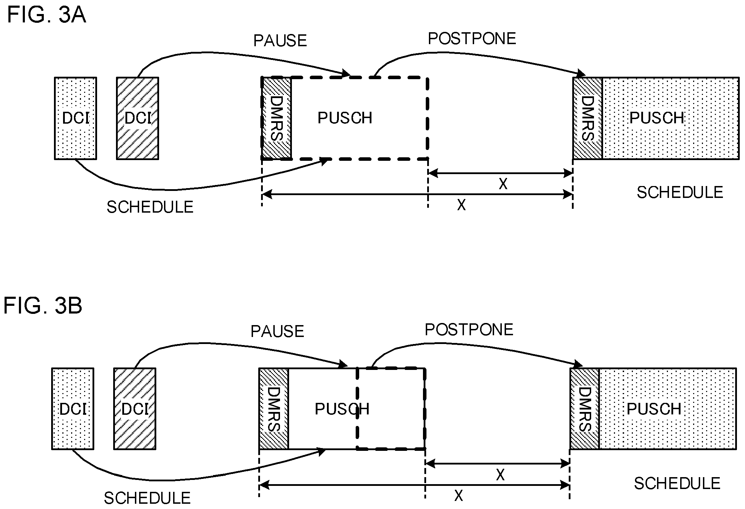

In the first pause operation, the UE may pause uplink transmission instructed by the instruction information in the DCI and perform the uplink transmission after the elapse of a given period (for example, X symbols or X slots) using the same configuration (for example, Figs. 3A and 3B). The configuration may include, for example, at least one of transmission power of the uplink transmission, DMRS configuration (for example, mapping type and the like), or the like.

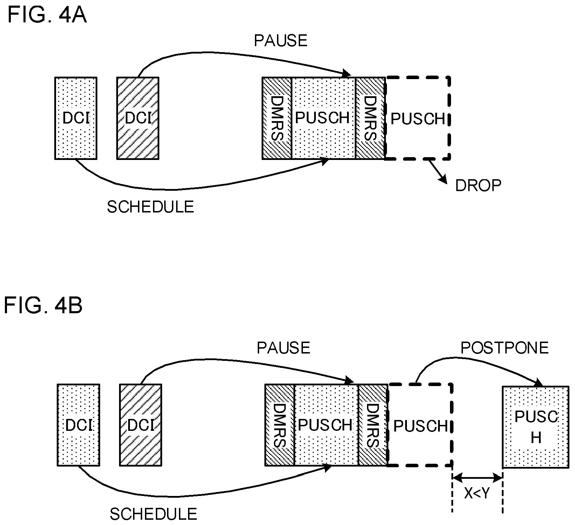

In the second pause operation, the UE may pause part of uplink transmission instructed by the instruction information in the DCI, and determine whether the uplink transmission is dropped (canceled) or postponed by a given period based on at least either whether the part of the uplink transmission has DMRS or the postponement period (for example, Figs. 4A and 4B).

Specifically, when the part of the uplink transmission specified by the instruction information has no DMRS, the UE may drop (cancel) the part of the uplink transmission. On the other hand, when the part of the uplink transmission has DMRS, the UE may perform the part of the uplink transmission after the elapse of the given period.

Alternatively, when the part of the uplink transmission has no DMRS and the postponement period (for example, X symbols or X slots) is less than (or equal to or less than) a given threshold (for example, Y symbols or Y slots), the UE may perform the part of the uplink transmission after the elapse of the given period.

On the other hand, when the part of the uplink transmission has no DMRS and the postponement period (for example, X symbols or X slots) is equal to or greater than (or greater than) the given threshold (for example, Y symbols or Y slots), the UE may drop (cancel) the part of the uplink transmission.

In the third pause operation, the UE may pause uplink transmission that uses time domain resources satisfying a given condition and perform the uplink transmission after the elapse of a given period. The given condition may be, for example, the elapse of a given period from the last symbol of the DCI including the instruction information.

Figs. 3A and 3B are diagrams illustrating examples of the first pause operation according to the second aspect. As illustrated in Figs. 3A and 3B, it is assumed that PUSCH is scheduled in given time/frequency domain resources by DCI (UL grant such as DCI format 0_0 or 0_1).

As illustrated in Fig. 3A, the UE may pause PUSCH transmission (including DMRS) specified by the instructional information in the other DCI and perform the PUSCH transmission after the elapse of a given period (for example, X symbols or X slots) using the same configuration. For example, in Fig. 3A, the other DCI specifies the pause of all PUSCHs (including DMRS) scheduled by the previous DCI. Therefore, the UE transmits all the PUSCHs after the elapse of the given period.

As illustrated in Fig. 3A, the given period (postponement period) corresponds to X symbols or X slots from the last symbol (or a symbol following the last symbol) or the first symbol of time domain resources scheduled for PUSCH by the previous DCI. The number of X symbols or the number of X slots may be specified by the other DCI, may be configured by a higher layer parameter, or may be given in the specification.

Fig. 3B differs from Fig. 3A in that the other DCI specifies the pause of part of PUSCH scheduled by the previous DCI. Fig. 3B illustrates the differences from Fig. 3A.

As illustrated in Fig. 3B, when the pause of the part of the PUSCH is instructed, the UE may transmit all of the PUSCH after the elapse of the given period (for example, X symbols or X slots).

Figs. 4A and 4B are diagrams illustrating examples of the second pause operation according to the second aspect. As illustrated in Figs. 4A and 4B, it is assumed that PUSCH transmission using time/frequency domain resources scheduled by DCI (UL grant such as DCI format 0_0 or 0_1) has been started.

As illustrated in Fig. 4A, when time domain resources for part of PUSCH instructed by the instruction information in the other DCI have no DMRS, the UE may drop (cancel) the PUSCH transmission that uses the time domain resources.

On the other hand, as illustrated in Fig. 4B, when the part of time domain resources for PUSCH instructed by the instruction information in the other DCI have no DMRS and the postponement period (for example, X symbols or X slots) is less than (or equal to or less than) a given threshold (for example, Y symbols or Y slots), the UE may perform, after the elapse of the postponement period, paused PUSCH transmission.

Note that Fig. 4B illustrates an example where the postponement period corresponds to X symbols or X slots from the last symbol of the time domain resources (or a symbol following the last symbol) scheduled for PUSCH by the previous DCI, but the present disclosure is not limited to this example. For example, the postponement period may correspond to X symbols or X slots from the first symbol of the time domain resources.

### <UCI handling>

A description will be given below of the handling of UCI included in uplink transmission (for example, PUSCH or PUCCH) paused based on the instruction information in the DCI (for example, the UE-specific DCI or the common DCI). Specifically, the UE may apply at least one of the following first to third UCI handlings.

In the first UCI handling, the UE may drop (or need not transmit) the UCI included in the paused uplink transmission.

In the second UCI handling, the UE may transmit (multiplex) at least part of the UCI (for example, HARQ-ACK) included in the paused uplink transmission with the other PUSCH. Note that the UE may drop (need not transmit) the part of the UCI (for example, CSI), or may multiplex the part of the UCI with the other uplink transmission.

In the third UCI handling, the UE may transmit (multiplex) at least the part of the UCI included in the paused uplink transmission (for example, PUSCH) with the other PUCCH (may cause at least the part of the UCI to fall back to PUCCH).

For example, when PUSCH is paused, the UE may transmit, using PUCCH, at least part of UCI (for example, HARQ-ACK) included in the PUSCH. The UE may determine resources for the PUCCH based on at least either DCI or a higher layer parameter. The UE may drop the other UCI (for example, CSI) included in the PUSCH, or may transmit the other UCI using the PUCCH.

### <D/U slot handling>

For NR, a study is underway on causing the UE to control a configuration of one or more slots (slot configuration) included within a given period based on at least either a higher layer parameter (for example, TDD-UL-DL-ConfigCommon, TDD-UL-DL-ConfigDedicated, or the like) or a value of a given field (for example, slot format indicator (SFI) field) in DCI.

The slot configuration is also referred to as a time divisional duplex (TDD) configuration, SFI instruction, or the like. The slot configuration may include, for example, at least one of the following:
- Number of consecutive slots (DL slots) including only downlink (DL) symbols (DL symbols) (nrofDownlinkSlots)
- Number of consecutive DL symbols

### (nrofDownlinkSymbols)

- Number of consecutive slots (UL slots) including only UL symbols (nrofUplinkSlots)
- Number of consecutive UL symbols

### (nrofUplinkSymbols)

- Index of each slot (slotIndex)
- Transmission direction of each symbol in each slot (for example, all DL symbols (allDownlink), all UL symbols (allUplink), explicit instruction (explicit), or the like), and note that the explicit instruction may include the numbers of consecutive DL symbols and UL symbols in the slot (nrofDownlinkSlots, nrofUplinkSymbols).

The types of slots controlled based on the above-described slot configuration include the DL slot, the UL slot, and a slot (D/U slot) including the DL symbol, the UL symbol, and a symbol for switching between DL and UL (referred to as a guard period (GP) or the like).

However, even when uplink transmission specified by the instruction information in the DCI (for example, the UE-specific DCI or the common DCI) is postponed to the D/U slot, the number of UL symbols available in the D/U slot may be less than the number of symbols for the uplink transmission.

Therefore, when the number of UL symbols available in the slot for the uplink transmission postponed based on the instruction information in the DCI is less than the number of symbols for the uplink transmission, the UE may drop or re-pause the uplink transmission, or may treat the uplink transmission as an error case.

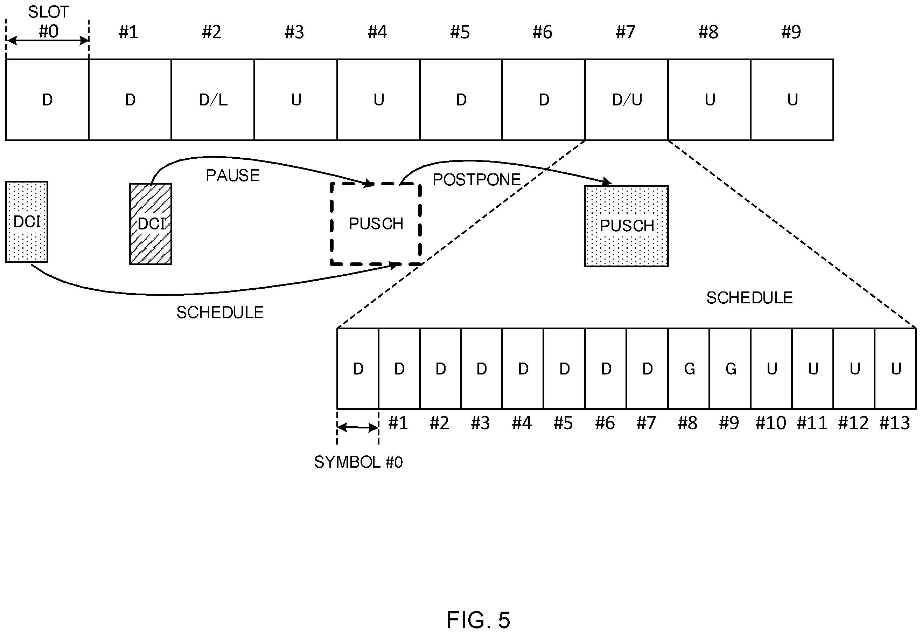

Fig. 5 is a diagram illustrating an example of D/U slot handling according to the second aspect. For example, in Fig. 5, the instruction information in the DCI detected in DL slot #1 specifies that PUSCH (for example, PUSCH having 14 symbols) scheduled in UL slot #4 is postponed to D/U slot #7.

For example, D/U slot #7 illustrated in Fig. 5 includes DL symbols #0 to #7, GP symbols #8 and #9, and UL symbols #10 to #13. On the other hand, the PUSCH postponed from slot #4 has 14 symbols. Therefore, the number of UL symbols (equal to 4) available in D/U slot #7 is less than the number of PUSCH symbols (equal to 14) postponed from slot #4.

Therefore, as illustrated in Fig. 5, the UE may drop the PUSCH that is postponed to D/U slot #7, re-pause the PUSCH, or treat the PUSCH as an error case. When the UE treats the PUSCH as an error case, the base station may control the postponement period specified by the instruction information in the DCI so as to prevent the PUSCH from being postponed to the D/U slot.

Further, a gap (postponement period) between original uplink transmission (for example, PUSCH scheduled in UL slot #4) and postponed uplink transmission may be determined based on slots having available UL symbols equal to or greater than the number of symbols for the uplink transmission.

Note that Fig. 5 illustrates the handling of D/U slot for PUSCH transmission, but the present disclosure is not limited to such handling. It goes without saying that the handling of D/U slot illustrated in Fig. 5 is applicable to different uplink transmission such as PUCCH transmission.

### <Modification>

An example according to the second aspect where time domain resources scheduled for uplink transmission are changed has been described, but frequency domain resources scheduled for uplink transmission may be changed based on instruction information in the DCI (for example, the UE-specific DCI or the common DCI).

### <<Change instruction for frequency domain>>

The DCI may include instruction information on frequency domain resources scheduled for uplink transmission (for example, at least either a frequency hopping (FH) boundary (FH boundary) or an offset used for FH (FH offset)). The instruction information may be a value of at least one field in the DCI. Further, the DCI including the instruction information may be, for example, UE-specific DCI or common DCI. Hereinafter, the FH boundary and/or the FH offset may be read as a frequency domain resource.

The instruction information in the DCI may specify, for example, at least either the change of the FH boundary or the change of the FH offset. The instruction information may further specify which uplink transmission should be changed. For example, each uplink transmission scheduled by the base station is assigned a given number (identifier), and the instruction information may specify a number (identifier) assigned to uplink transmission to be paused (for example, a number assigned to PUSCH or PUCCH to be canceled).

Further, the DCI (or the instruction information in the DCI) may include at least either information specifying a new FH boundary (for example, an offset in the time domain at the FH boundary (for example, the number of symbols) or an index of a symbol serving as the FH boundary) or information specifying a new FH offset (for example, the number of resource blocks (physical resource blocks (PRBs)).

### <<Frequency domain resource change operation>>

The UE controls the change of at least some frequency domain resources scheduled for uplink transmission based on the instruction information in the DCI (for example, the UE-specific DCI or the common DCI).

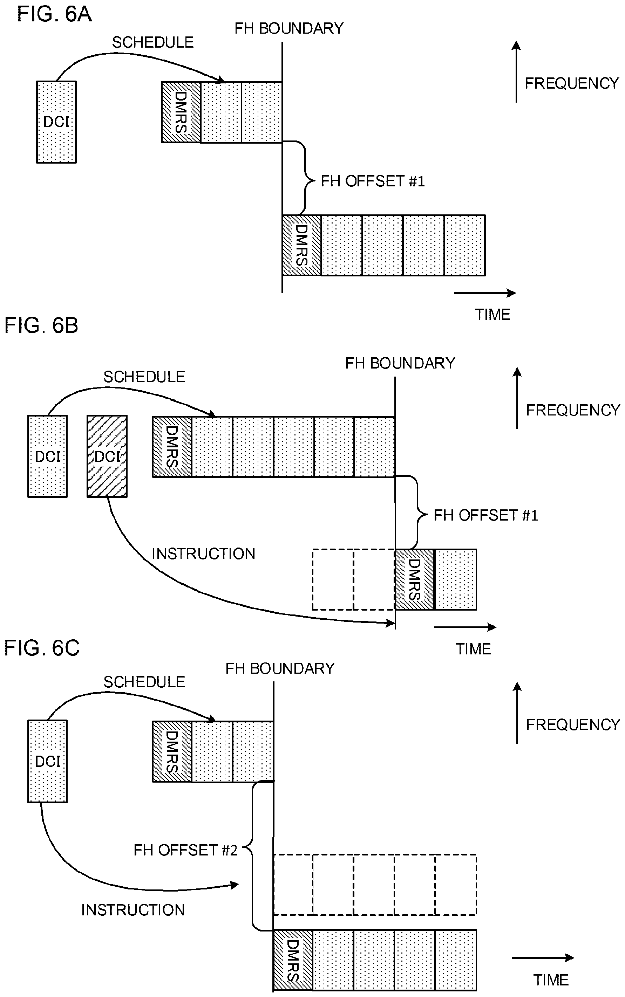

Specifically, the UE may change at least either the FH boundary or the FH offset based on the instruction information in the DCI (for example, Figs. 6A to 6C).

Further, the UE may apply, when a given condition is satisfied, at least either the change of the FH boundary or the change of the FH offset. The given condition may be, for example, the elapse of a given period from the last symbol of the DCI including the instruction information.

Figs. 6A to 6C are diagrams illustrating examples of a frequency domain resource change operation according to the modification of the second aspect. As illustrated in Figs. 6A to 6C, it is assumed that PUSCH is scheduled in given time/frequency domain resources by the DCI (UL grant such as DCI format 0_0 or 0_1).

For example, in Fig. 6A, FH using FH offset #1 with boundary between the third and fourth symbols (third or fourth symbol) set as the FH boundary is applied to the PUSCH scheduled by the DCI.

As illustrated in Fig. 6B, the UE may change the FH boundary from between the third and fourth symbols to between the sixth and seventh symbols (sixth or seventh symbol) based on the instruction information in the other DCI. Note that the offset at the FH boundary (for example, the number of symbols) may be given in the specification, may be configured by a higher layer parameter, or may be specified by the instruction information in the other DCI.

As illustrated in Fig. 6B, the UE may change, when the FH boundary is changed after the elapse of a given period, the position of at least one symbol to which DMRS is mapped. For example, in Fig. 6A, DMRS is mapped to the fourth symbol, whereas in Fig. 6B, DMRS is mapped to the seventh symbol. As illustrated in Fig. 6B, changing the mapping position of DMRS allows PUSCH in the second hop to be properly demodulated even when the FH boundary is changed.

Further, as illustrated in Fig. 6C, the UE may change FH offset# 1 to FH offset #2 based on the instruction information in the other DCI. Note that the amount of change between FH offset #1 and FH offset #2 (for example, the number of PRBs) may be determined by at least one of the specification, higher layer parameter, or instruction information in DCI, or FH offset #2 may be determined with respect to the first hop.

Although not illustrated, with reference to a combination of Figs. 6B and 6C, the UE may change both the FH boundary and the FH offset based on the instruction information in the DCI.

According to the second aspect, the UE can suitably change frequency domain resources or time domain resources for uplink transmission based on the instruction information in the DCI. As a result, the uplink transmission of the first traffic type that has been already scheduled or configured can be interrupted, and then the uplink transmission of the second traffic type can be performed, thereby allowing the requirements of the second traffic type more stringent than the requirements of the first traffic type to be satisfied.

### (Third Aspect)

A description will be given, according to the third aspect, of how to re-schedule at least some of the time/frequency domain resources scheduled for uplink transmission. Here, re-scheduling may correspond to a case where uplink transmission is canceled, and then the other time/frequency domain resources are scheduled for the canceled uplink transmission by DCI.

### <Re-schedule instruction>

The DCI may include instruction information on at least either (1) stopping (or cancellation) of uplink transmission or (2) re-transmission of the uplink transmission. The instruction information may be a value of at least one field in the DCI. Further, the DCI including the instruction information may be, for example, UE-specific DCI or common DCI.
(1) The instruction information in the DCI may specify information on stopping or cancellation of uplink transmission. Here, the UE needs to identify whether the DCI is provided for scheduling for normal re-transmission or for re-scheduling (stop and re-tx).

Therefore, the UE may be explicitly or implicitly notified of whether the DCI is provided for scheduling for normal re-transmission or for re-scheduling. For example, a given field value in the DCI (for example, a new bit field or an existing field) may specify whether the DCI is provided for scheduling for normal re-transmission or for re-scheduling.

Alternatively, the UE may determine whether the DCI is provided for scheduling for normal re-transmission or for re-scheduling based on the type of a timer in operation. For example, the UE may determine that the DCI is provided for re-scheduling (stop and re-tx) when the HARQ round trip time (RTT) timer is in operation. On the other hand, the UE may determine that the DCI is provided for scheduling for normal re-transmission when the HARQ re-transmission timer is in operation.

Further, a timer for measuring a period from UL grant reception to the termination of uplink transmission may be introduced. When the DCI is received while the timer is in operation, the UE may determine that the DCI is provided for re-scheduling (stop and re-tx).

(2) The instruction information in the DCI may specify information on re-transmission of uplink transmission (for example, time/frequency domain resources for re-transmission). The information may be specified by a given field (for example, a new field) within a given DCI format (for example, DCI format 0_0, 0_1, 1_0, or 1_1), or by a new DCI format.

### <Reschedule operation>

The UE controls the cancellation of uplink transmission based on the instruction information in the DCI (for example, the UE-specific DCI or the common DCI).

The UE may cancel uplink transmission based on the instruction information in the DCI and perform the uplink transmission using time/frequency domain resources determined based on the instruction information in the DCI. For example, the UE may apply the first to third cancel operations according to the first aspect to cancel the uplink transmission.

Further, when the uplink transmission (for example, PUSCH) specified by the instruction information in the DCI includes UCI that is piggybacked from another uplink transmission (for example, PUCCH), and the instruction information for the uplink transmission (for example, instruction information on cancellation, pause, or re-scheduling) is not received, the UE need not transmit the UCI in the uplink transmission to be re-transmitted. In this case, the UE may transmit the UCI in the original uplink transmission (for example, PUCCH) or may drop the UCI.

Alternatively, when the uplink transmission (for example, PUSCH) specified by the instruction information in the DCI includes UCI that is piggybacked from another uplink transmission (for example, PUCCH), and the instruction information for the uplink transmission (for example, instruction information on cancellation, pause, or re-scheduling) is not received, the UE may transmit the UCI in the uplink transmission to be re-transmitted.

According to the third aspect, the UE can cancel and re-schedule uplink transmission based on the instruction information in the DCI. As a result, the uplink transmission of the first traffic type that has been already scheduled or configured can be interrupted, and then the uplink transmission of the second traffic type can be performed, thereby allowing the requirements of the second traffic type more stringent than the requirements of the first traffic type to be satisfied.

### (Radio communication system)

Now, a configuration of a radio communication system according to one embodiment of the present disclosure will be described below. In this radio communication system, communication is performed using one or a combination of the radio communication methods according to the embodiment of the present disclosure.

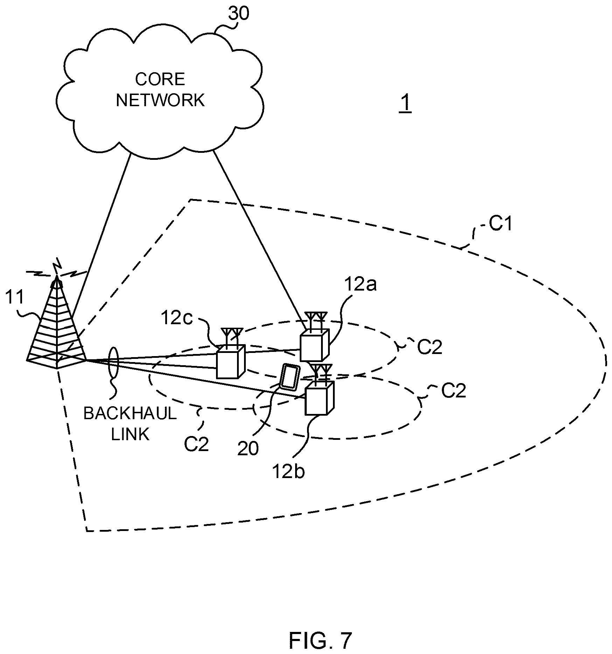

Fig. 7 is a diagram illustrating an example of a schematic configuration of the radio communication system according to one embodiment. A radio communication system 1 may be a system that implements communication using long term evolution (LTE), 5th generation mobile communication system new radio (5G NR), and the like specified by third generation partnership project (3GPP).

Further, the radio communication system 1 may support dual connectivity (multi-RAT dual connectivity (MR-DC)) between a plurality of radio access technologies (RATs). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are placed within the macro cell C1 and that form small cells C2 narrower than the macro cell C1. A user terminal 20 may be located in at least one cell. The arrangement, number, and the like of cells and the user terminals 20 are not limited to the aspects illustrated in the drawings. Hereinafter, the base stations 11 and 12 will be collectively referred to as "base stations 10", unless specified otherwise.

The user terminal 20 may be connected to at least one of the plurality of base stations 10. The user terminal 20 may use at least one of carrier aggregation or dual connectivity (DC) using a plurality of component carriers (CC).

Each CC may be included in at least one of a frequency range 1 (FR1) or a frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and for example, FR1 may be a frequency range higher than FR2.

The user terminal 20 may perform communication in each CC using at least one of time division duplex (TDD) or frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

Each base station 10 may be connected to a core network 30 via another base station 10 or directly. The core network 30 may include, for example, at least one of evolved packet core (EPC), 5G core network (5GCN), next generation core (NGC), or the like.

The user terminal 20 may support at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), or the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by the user terminals 20, a physical broadcast channel (PBCH), a physical downlink control channel (PDCCH), or the like may be used.

In the radio communication system 1, as an uplink channel, a physical uplink shared channel (PUSCH) shared by the user terminals 20, a physical uplink control channel (PUCCH), a physical random access channel (PRACH), or the like may be used.

User data, higher layer control information, a system information block (SIB), and the like are transmitted by PDSCH. User data, higher layer control information, and the like may be transmitted by PUSCH. Further, a master information block (MIB) may be transmitted by PBCH.

Lower layer control information may be transmitted by PDCCH. The lower layer control information may include, for example, downlink control information (DCI) including scheduling information of at least one of PDSCH or PUSCH.

Note that DCI that schedules PDSCH may be referred to as DL assignment, DL DCI, or the like, and DCI that schedules PUSCH may be referred to as UL grant, UL DCI, or the like. Note that PDSCH may be read as DL data, and PUSCH may be read as UL data.

A control resource set (CORESET) and a search space may be used to detect PDCCH. CORESET corresponds to resources where DCI is searched for. The search space corresponds to a search area and a search method for PDCCH candidates. One CORESET may be associated with one or more search spaces. The UE may monitor CORESET associated with a given search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

By means of PUCCH, channel state information (CSI), delivery acknowledgement information (for example, hybrid automatic repeat request acknowledgement (HARQ-ACK), which may be referred to as ACK/NACK or the like), scheduling request (SR), and the like may be transmitted. By means of PRACH, a random access preamble for establishing a connection with a cell may be transmitted.

Note that in the present disclosure, downlink, uplink, and the like may be expressed without "link". Each channel may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be, for example, at least one of a primary synchronization signal (PSS) or a secondary synchronization signal (SSS). A signal block including SS (PSS or SSS) and PBCH (and DMRS for PBCH) may be referred to as an SS/PBCH block, SS block (SSB), or the like. Note that SS, SSB, or the like may also be referred to as a reference signal.

In the radio communication system 1, a sounding reference signal (SRS), a demodulation reference signal (DMRS), and the like may be transmitted as an uplink reference signal (UL-RS). Note that DMRS may be referred to as a UE-specific reference signal.

### (Base station)

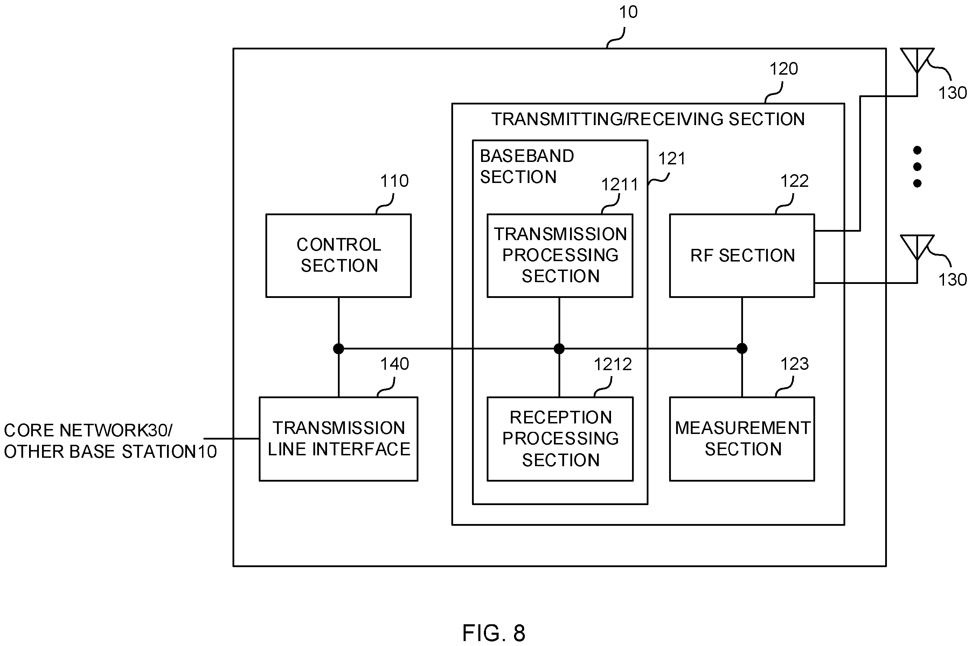

Fig. 8 is a diagram illustrating an example of a configuration of a base station according to one embodiment. The base station 10 includes a control section 110, a transmitting/receiving section 120, a transmitting/receiving antenna 130, and a transmission line interface 140. Note that one or more of the control sections 110, one or more of the transmitting/receiving sections 120, one or more of the transmitting/receiving antennas 130, and one or more of the transmission line interfaces 140 may be included.

Note that, although this example will primarily show functional blocks that pertain to characteristic parts of the present embodiment, it may be assumed that the base station 10 also has other functional blocks necessary for radio communication. A part of processing of each section described below may be omitted.

The control section 110 controls the entire base station 10. The control section 110 can be constituted by a controller, a control circuit, or the like described based on general understanding in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data, control information, a sequence, and the like to be transmitted as a signal, and may transfer the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like described based on general understanding in the technical field to which the present disclosure relates.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmitting/receiving antenna 130 can be constituted by an antenna such as an array antenna described based on general understanding in the technical field to which the present disclosure relates.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ re-transmission control), and the like, for example, on data or control information acquired from the control section 110 to generate a bit string to be transmitted.

The transmitting/receiving section 120 (transmission processing section 1211) may perform transmission processing such as channel coding (which may include error correction coding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure the received power (for example, reference signal received power (RSRP)), the received quality (for example, reference signal received quality (RSRQ)), the signal to interference plus noise ratio (SINR), the signal to noise ratio (SNR), the signal strength (for example, received signal strength indicator (RSSI)), the transmission path information (for example, CSI), and the like. The measurement result may be output to the control section 110.

The transmission line interface 140 may transmit/receive a signal (backhaul signaling) to and from an apparatus included in the core network 30, the other base stations 10, and the like, and may acquire, transmit, and the like user data (user plane data), control plane data, and the like for the user terminal 20.

Note that the transmitting section and the receiving section of the base station 10 in the present disclosure may be constituted by at least one of the transmitting/receiving section 120, the transmitting/receiving antenna 130, or the transmission line interface 140.

Note that the transmitting/receiving section 120 receives an uplink signal (for example, uplink control channel, uplink shared channel, or DMRS). Further, the transmitting/receiving section 120 transmits a downlink signal (for example, downlink control channel, downlink shared channel, DMRS, downlink control information, or higher layer parameter).

### (User terminal)

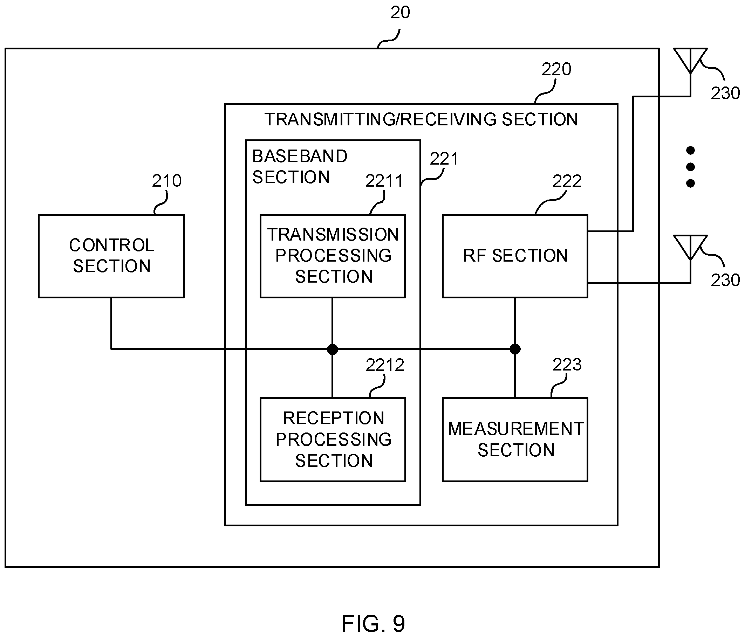

Fig. 9 is a diagram illustrating an example of a configuration of a user terminal according to one embodiment. The user terminal 20 includes a control section 210, a transmitting/receiving section 220, and a transmitting/receiving antenna 230. Note that one or more of the control sections 210, one or more of the transmitting/receiving sections 220, and one or more of the transmitting/receiving antennas 230 may be included.

Note that, although this example will primarily show functional blocks that pertain to characteristic parts of the present embodiment, it may be assumed that the user terminal 20 also has other functional blocks necessary for radio communication. A part of processing of each section described below may be omitted.

The control section 210 controls the entire user terminal 20. The control section 210 can be constituted by a controller, a control circuit, or the like described based on general understanding in the technical field to which the present disclosure relates.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as a signal, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmission/reception circuit, and the like described based on general understanding in the technical field to which the present disclosure relates.

The transmitting/receiving section 220 may be constituted as an integrated transmitting/receiving section, or may be constituted by a transmitting section and a receiving section. The transmitting section may be constituted by the transmission processing section 2211 and the RF section 222. The receiving section may be constituted by the reception processing section 2212, the RF section 222, and the measurement section 223.

The transmitting/receiving antenna 230 can be constituted by an antenna such as an array antenna described based on general understanding in the technical field to which the present disclosure relates.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ re-transmission control), and the like, for example, on data or control information acquired from the control section 210 to generate a bit string to be transmitted.

The transmitting/receiving section 220 (transmission processing section 2211) may perform transmission processing such as channel coding (which may include error correction coding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) does not have to perform DFT processing as the transmission processing.

The transmitting/receiving section 220 (RF section 222) may perform modulation to a radio frequency band, filtering processing, amplification, and the like on the baseband signal, and may transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmitting/receiving section 220 (measurement section 223) may perform measurement on the received signal. For example, the measurement section 223 may perform RRM measurement, CSI measurement, and the like based on the received signal. The measurement section 223 may measure the received power (for example, RSRP), the received quality (for example, RSRQ, SINR, or SNR), the signal strength (for example, RSSI), transmission path information (for example, CSI), and the like. The measurement result may be output to the control section 210.

Note that the transmitting section and the receiving section of the user terminal 20 in the present disclosure may be constituted by at least one of the transmitting/receiving section 220, the transmitting/receiving antenna 230, or the transmission line interface 240.

Note that the transmitting/receiving section 220 transmits an uplink signal (for example, uplink control channel, uplink shared channel, or DMRS). Further, the transmitting/receiving section 220 receives a downlink signal (for example, downlink control channel, downlink shared channel, DMRS, downlink control information, or higher layer parameter).

The control section 210 controls, based on the first downlink control information, stopping of the uplink transmission that uses at least some of the time and frequency domain resources determined based on the second downlink control information received before the first downlink control information or a higher layer parameter.

The control section 210 cancels, based on the first downlink control information, the uplink transmission that uses at least some of the time and frequency domain resources (first aspect).

The control section 210 postpones, based on the first downlink control information, the uplink transmission that uses at least some of the time and frequency domain resources by a given period (second aspect).

The control section 210 changes, based on the first downlink control information, at least either a boundary or an offset used for frequency hopping of the uplink transmission (modification of the second aspect).

The control section 210 controls, based on the first downlink control information, cancellation or retransmission of the uplink transmission that uses at least some of the time and frequency domain resources (third aspect).

### (Hardware configuration)

Note that the block diagrams that have been used to describe the above embodiment illustrate blocks in functional units. These functional blocks (components) may be implemented by any combination of at least either hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wires, radio, or the like, for example) and using these plural apparatuses. The functional block may be implemented by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (component) that makes a transmission function may be referred to as a transmitting unit or a transmitter. In any case, as described above, the implementation method is not particularly limited.

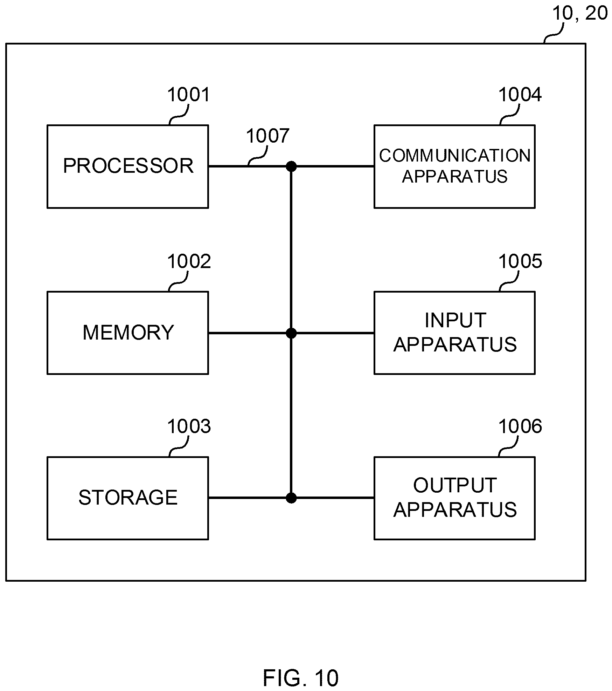

For example, the base station, the user terminal, and the like according to one embodiment of the present disclosure may function as a computer that executes the processing of the radio communication method of the present disclosure. Fig. 10 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed simultaneously, sequentially, or in a different manner, by two or more processors. Note that the processor 1001 may be implemented with one or more chips.

Each function of the base station 10 and the user terminal 20 is implemented by, for example, reading given software (program) onto hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured with a central processing unit (CPU), which includes interfaces with peripheral equipment, a control apparatus, a computing apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and the like from at least either the storage 1003 or the communication apparatus 1004 into the memory 1002, and executes various processing according to these. As for the programs, programs to allow computers to execute at least part of the operations of the above-described embodiment may be used. For example, the control section 110 (210) may be implemented by control programs that are stored in the memory 1002 and that operate on the processor 1001, and other functional blocks may be implemented likewise.

The memory 1002 is a computer-readable recording medium, and may be constituted by, for example, at least one of a read only memory (ROM), an erasable programmable ROM (EPROM), an electrically EPROM (EEPROM), a random access memory (RAM), or other appropriate storage media. The memory 1002 may be referred to as a "register", a "cache", a "main memory (primary storage apparatus)", or the like. The memory 1002 can store a program (program code), a software module, and the like executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (compact disc ROM (CD-ROM) or the like), a digital versatile disc, or a Blu-ray (registered trademark) disc), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a radio network, and for example, is referred to as "network device", "network controller", "network card", "communication module", or the like. The communication apparatus 1004 may be configured to include a high frequency switch, a duplexer, a filter, a frequency synthesizer and the like in order to implement, for example, at least one of frequency division duplex (FDD) or time division duplex (TDD). For example, the above-described transmitting/receiving section 120 (220), transmitting/receiving antenna 130 (230), and the like may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor, or the like). The output apparatus 1006 is an output device for allowing sending output to the outside (for example, a display, a speaker, a light emitting diode (LED) lamp, or the like). Note that the input apparatus 1005 and the output apparatus 1006 may be provided in an integrated structure (for example, a touchscreen).

Furthermore, these apparatuses, including the processor 1001, the memory 1002, and the like are connected by the bus 1007 for communicating information. The bus 1007 may include a single bus, or may include different buses for each pair of apparatuses.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), or the like, and part or all of the functional blocks may be implemented by the hardware. For example, the processor 1001 may be implemented with at least one of these pieces of hardware.

### (Modification)

Note that the terms described in the present disclosure and the terms necessary for understanding the present disclosure may be replaced with other terms that convey the same or similar meanings. For example, a channel, a symbol, and a signal (or signaling) may be replaced with each other. Also, the signal may be a message. A reference signal can be abbreviated as an "RS", and may be referred to as a "pilot", a "pilot signal" or the like, depending on which standard applies. Furthermore, a "component carrier (CC)" may be referred to as a "cell", a "frequency carrier", a "carrier frequency", or the like.

A radio frame may include one or more periods (frames) in the time domain. Each of the one or more periods (frames) included in the radio frame may be referred to as a "subframe". Furthermore, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and the like.

A slot may include one or more symbols in the time domain (orthogonal frequency division multiplexing (OFDM) symbols, single carrier frequency division multiple access (SC-FDMA) symbols, and the like). Further, the slot may be a time unit based on numerology.

The slot may include a plurality of mini slots. Each mini slot may include one or more symbols in the time domain. Further, the mini slot may be referred to as a "subslot". The mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using the mini slot may be referred to as "PDSCH (PUSCH) mapping type B".

The radio frame, the subframe, the slot, the mini slot, and the symbol each represent a time unit in signal communication. The radio frame, the subframe, the slot, the mini slot, and the symbol may be each called by other applicable names. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "mini slot", or the like, instead of a "subframe".

Here, the TTI refers to, for example, the minimum time unit of scheduling in radio communication. For example, in the LTE systems, a base station schedules radio resources (for example, frequency bandwidth and transmission power that can be used in each user terminal) to allocate the radio resources to each user terminal on a TTI basis. Note that definition of the TTI is not limited to this.

The TTI may be a transmission time unit such as a channel-coded data packet (transport block), a code block, a codeword, or the like, or may be a processing unit such as scheduling or link adaptation. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that the long TTI (for example, the usual TTI, the subframe, or the like) may be replaced with a TTI having a time duration exceeding 1 ms, and the short TTI (for example, the shortened TTI) may be replaced with a TTI having a TTI duration less than the TTI duration of the long TTI and not less than 1 ms.

A resource block (RB) is a resource allocation unit of the time domain and frequency domain, and may include one or a plurality of consecutive subcarriers in the frequency domain. The number of subcarriers included in the RB may be the same regardless of numerology, and may be 12, for example. The number of subcarriers included in the RB may be determined based on numerology.

Also, the RB may include one or more symbols in the time domain, and may be one slot, one mini slot, one subframe or one TTI in length. One TTI, one subframe, and the like may each include one or more resource blocks.

Note that one or more RBs may be referred to as a physical resource block (PRB (Physical RB)), a subcarrier group (SCG), a resource element group (REG), a PRB pair, an RB pair, or the like.

Furthermore, the resource block may include one or more resource elements (REs). For example, one RE may be a radio resource region of one subcarrier and one symbol.

The bandwidth part (BWP) (which may be referred to as partial bandwidth or the like) may represent a subset of consecutive common RB (common resource blocks) for a given numerology in a given carrier. Here, the common RB may be specified by an RB index based on a common reference point of the carrier. A PRB may be defined in a given BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that "cell", "carrier", and the like in the present disclosure may be read as "BWP".

Note that the structures of radio frames, subframes, slots, mini slots, symbols, and the like described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and the like can be variously changed.

Furthermore, the information and parameters described in the present disclosure may be represented in absolute values, represented in relative values with respect to given values, or represented using other corresponding information. For example, a radio resource may be specified by a given index.

Names used for, for example, parameters in the present disclosure are in no respect limitative. Furthermore, any mathematical expression or the like that uses these parameters may differ from those explicitly disclosed in the present disclosure. Since various channels (physical uplink control channel (PUCCH), physical downlink control channel (PDCCH), and the like) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and the like may be input and output via a plurality of network nodes.

The information, signals, and the like that have been input and/or output may be stored in a specific location (for example, in a memory), or may be managed in a control table. The information, signals, and the like to be input and/or output can be overwritten, updated, or appended. The information, signals, and the like that are output may be deleted. The information, signals, and the like that are input may be transmitted to other apparatuses.

The reporting of information is by no means limited to the aspects/embodiments described in the present disclosure, and may be performed using other methods. For example, the reporting of information in the present disclosure may be performed by using physical layer signaling (for example, downlink control information (DCI), uplink control information (UCI), higher layer signaling (for example, radio resource control (RRC) signaling, broadcast information (master information block (MIB), system information block (SIB), or the like), medium access control (MAC) signaling, another signal, or a combination thereof.

Note that physical layer signaling may be referred to as "L1/L2 (Layer 1/Layer 2) control information (L1/L2 control signals)", "L1 control information (L1 control signal)" and the like. Further, the RRC signaling may be referred to as an "RRC message", and may be, for example, an RRC connection setup message, an RRC connection reconfiguration message, or the like. Further, MAC signaling may also be reported using, for example, MAC control elements (MAC CEs).

Also, reporting of given information (for example, reporting of information to the effect that "X holds") does not necessarily have to be sent explicitly, and can be sent implicitly (for example, by not reporting this piece of information, by reporting another piece of information, and the like).

Determinations may be made in values represented by one bit (0 or 1), may be made in Boolean values that represent true or false, or may be made by comparing numerical values (for example, comparison with a given value).

Regardless of whether referred to as "software", "firmware", "middleware", "microcode" or "hardware description language", or called by other names, software should be interpreted broadly to mean instructions, instruction sets, code, code segments, program codes, programs, subprograms, software modules, applications, software applications, software packages, routines, subroutines, objects, executable files, execution threads, procedures, functions, and the like.

Also, software, instructions, information, and the like may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be referred to by a term such as a macro cell, a small cell, a femto cell, or a pico cell.

The base station can accommodate one or more (for example, three) cells. When the base station accommodates a plurality of cells, the entire coverage area of the base station can be partitioned into a plurality of smaller areas, and each smaller area can provide the communication service through the base station subsystem (for example, indoor small base station (remote radio head (RRH))). The term "cell" or "sector" refers to a part or all of the coverage area of at least one of a base station and/or a base station subsystem that performs communication service in this coverage.

In the present disclosure, the terms "mobile station (MS)", "user terminal", "user equipment (UE)", "terminal" and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmission apparatus, a reception apparatus, a wireless communication apparatus and the like. Note that at least one of the base station or the mobile station may be a device mounted on a moving object, a moving object itself, or the like. The moving object may be a vehicle (for example, automobile and airplane), an unmanned moving object (for example, drone and autonomous vehicle), or a robot (manned or unmanned). Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration acquired by replacing communication between a base station and a user terminal with communication among a plurality of user terminal (for example, may be referred to as Device-to-Device (D2D), Vehicle-to-Everything (V2X), or the like) or the like. In the case, a configuration in which the user terminal 20 has the function of the above-described base station 10 may be adopted. In addition, terms such as "uplink" and "downlink" may be interpreted as a term corresponding to communication between terminals (for example, "side"). For example, an uplink channel and a downlink channel may be replaced with a side channel.

Likewise, the user terminal in the present disclosure may be replaced with the base station. In this case, the base station 10 may be configured to have the functions of the user terminal 20 described above.

The operations that have been described in the present disclosure to be performed by the base station may be performed by its upper node, in some cases. In a network including one or more network nodes with base stations, it is obvious that various operations performed to communicate with terminals can be performed by base stations, one or more network nodes (for example, mobility management entities (MMEs), serving-gateways (S-GWs), and the like may be possible, but these are not limiting) other than base stations, or combinations of these.

The aspects/embodiments illustrated in the present disclosure may be used individually or in combinations, which may be switched depending on the mode of implementation. Further, the order of processes, sequences, flowcharts and so on that have been used to describe the aspects/embodiments herein may be re-ordered as long as inconsistencies do not arise. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New-RAT), New Radio(NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate radio communication methods and a next generation system expanded based on these methods, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determine" as used herein may be interpreted to mean making a determinations related to receiving (for example, receiving information), transmitting (for example, transmitting information), inputting, outputting, accessing (for example, accessing data in a memory), and the like.

In addition, "determining" as used herein may be interpreted to mean making determination related to resolving, selecting, choosing, establishing, comparing, and the like. In other words, "determining" as used herein may be interpreted to mean making determination related to some operations.

In addition, "determining" as used herein may be read as "assuming", "expecting", "considering", or the like.

The "maximum transmission power" described in the present disclosure may mean a maximum value of transmission power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are respectively different from C". The terms such as "separated", "coupled", and the like may be similarly interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

## Claims

1. A terminal (20) comprising:
a receiving section (220) configured to receive a first Downlink Control Information, DCI, including a cancellation indication on Physical Uplink Shared Channel, PUSCH, transmission and a second DCI including a parameter indicating a priority of the PUSCH transmission; and
a control section (210) configured to control to cancel the PUSCH transmission, based on the priority indicated by the parameter and a time domain resource and frequency domain resource indicated by the cancellation indication.

2. The terminal (20) according to claim 1, wherein the control section (210) is configured to control to cancel the PUSCH transmission that overlaps the time domain resource, the time domain resource being after a given period from a last symbol of the first DCI.

3. The terminal (20) according to claim 1 or 2, wherein the first DCI is a DCI common to one or more terminals.

4. A radio communication method for a terminal (20), comprising:
receiving a first Downlink Control Information, DCI, including a cancellation indication on Physical Uplink Shared Channel, PUSCH, transmission and a second DCI including a parameter indicating a priority of the PUSCH transmission; and
controlling to cancel the PUSCH transmission, based on the priority indicated by the parameter and a time domain resource and frequency domain resource indicated by the cancellation indication.

5. A base station (10) comprising:
a transmitting section (120) configured to transmit a first Downlink Control Information, DCI, including a cancellation indication on Physical Uplink Shared Channel, PUSCH, transmission and a second DCI including a parameter indicating a priority of the PUSCH transmission; and
a control section (110) configured to control not to receive the PUSCH, based on the priority indicated by the parameter and a time domain resource and frequency domain resource indicated by the cancellation indication.

6. A system comprising a terminal (20) and a base station (10), wherein
the terminal (20) comprises:
a receiving section (220) configured to receive a first Downlink Control Information, DCI including a cancellation indication on Physical Uplink Shared Channel, PUSCH, transmission and a second DCI including a parameter indicating a priority of the PUSCH transmission; and
a control section (210) configured to control to cancel the PUSCH transmission, based on the priority indicated by the parameter and a time domain resource and frequency domain resource indicated by the cancellation indication, and
the base station (10) comprises:
a transmitting section (120) configured to transmit the first DCI and the second DCI; and
a control section (110) configured to control not to receive the PUSCH, based on the priority indicated by the parameter and the time domain resource and frequency domain resource indicated by the cancellation indication.

## Patentansprüche

1. Endgerät (20), das umfasst:
einen Empfangsabschnitt (220), der zum Empfangen einer ersten Empfangen einer ersten Abwärtsverbindungssteuerinformation, DCI, konfiguriert ist, einschließlich einer Annullierungsanzeige bei einer gemeinsam genutzten physikalischen Aufwärtsverbindungskanal-, PUSCH-, Übertragung und einer zweiten DCI einschließlich eines Parameters, der eine Priorität der PUSCH-Übertragung anzeigt; und
einen Steuerabschnitt (210), der so konfiguriert ist, dass er das Annullieren der PUSCH-Übertragung auf der Grundlage der durch den Parameter angezeigten Priorität und einer durch die Annullierungsanzeige angezeigten Zeitbereichsressource und Frequenzbereichsressource steuert.

2. Endgerät (20) nach Anspruch 1, wobei der Steuerabschnitt (210) so konfiguriert ist, dass er das Annullieren der PUSCH-Übertragung steuert, die die Zeitbereichsressource überlappt, wobei die Zeitbereichsressource nach einer gegebenen Zeitspanne ab einem letzten Symbol der ersten DCI liegt.

3. Endgerät (20) nach Anspruch 1 oder 2, wobei die erste DCI eine gemeinsame DCI für ein oder mehrere Endgeräte ist.

4. Funkkommunikationsverfahren für ein Endgerät (20), das umfasst:
Empfangen einer ersten Abwärtsverbindungssteuerinformation, DCI, einschließlich einer Annullierungsanzeige bei einer gemeinsam genutzten physikalischen Aufwärtsverbindungskanal-, PUSCH-, Übertragung und einer zweite DCI einschließlich eines Parameters, der eine Priorität der PUSCH-Übertragung anzeigt; und
Steuern des Annullierens der PUSCH-Übertragung auf der Grundlage der durch den Parameter angezeigten Priorität und einer durch die Annullierungsanzeige angezeigten Zeitbereichsressource und Frequenzbereichsressource.

5. Basisstation (10), die umfasst:
einen Übertragungsabschnitt (120), der zum Übertragen einer ersten Abwärtsverbindungssteuerinformation, DCI, konfiguriert ist, einschließlich einer Annullierungsanzeige bei einer gemeinsam genutzten physikalischen Aufwärtsverbindungskanal-, PUSCH-, Übertragung und einer zweiten DCI einschließlich eines Parameters, der eine Priorität der PUSCH-Übertragung anzeigt; und
einen Steuerabschnitt (110), der so konfiguriert ist, dass er steuert, den PUSCH nicht zu empfangen, und zwar auf der Grundlage der durch den Parameter angezeigten Priorität und einer Zeitbereichsressource und einer Frequenzbereichsressource, die durch die Annullierungsanzeige angezeigt werden.

6. System, das ein Endgerät (20) und eine Basisstation (10) umfasst, wobei
das Endgerät (20) umfasst:
einen Empfangsabschnitt (220), der zum Empfangen einer ersten Abwärtsverbindungssteuerinformation, DCI, konfiguriert ist einschließlich einer Annullierungsanzeige bei einer gemeinsam genutzten physikalischen Aufwärtsverbindungskanal-, PUSCH-, Übertragung und einer zweiten DCI einschließlich eines Parameters, der eine Priorität der PUSCH-Übertragung anzeigt; und
einen Steuerabschnitt (210), der so konfiguriert ist, dass er das Annullieren der PUSCH-Übertragung auf der Grundlage der durch den Parameter angezeigten Priorität und einer Zeitbereichsressource und Frequenzbereichsressource, die durch die Annullierungsanzeige angezeigt werden, steuert, und
die Basisstation (10) umfasst:
einen Übertragungsabschnitt (120), der so konfiguriert ist, dass er die erste DCI und die zweite DCI überträgt; und
einen Steuerabschnitt (110), der so konfiguriert ist, dass er auf der Grundlage der durch den Parameter angezeigten Priorität und der durch die Annullierungsanzeige angezeigten Zeitbereichsressource und Frequenzbereichsressource steuert, dass der PUSCH nicht empfangen wird.

## Revendications

1. Terminal (20) comprenant :
une section (220) de réception configurée pour recevoir des premières informations de commande de liaison descendante, DCI, incluant une indication d'annulation sur une transmission par canal physique partagé de liaison montante, PUSCH, et des secondes DCI incluant un paramètre indiquant une priorité de la transmission par PUSCH ; et
une section (210) de commande configurée pour commander l'annulation de la transmission par PUSCH, sur la base de la priorité indiquée par le paramètre et une ressource de domaine temporel et une ressource de domaine fréquentiel indiquées par l'indication d'annulation.

2. Terminal (20) selon la revendication 1, dans lequel la section (210) de commande est configurée pour commander l'annulation de la transmission par PUSCH qui chevauche la ressource de domaine temporel, la ressource de domaine temporel se situant après une période donnée depuis un dernier symbole des premières DCI.

3. Terminal (20) selon la revendication 1 ou 2, dans lequel les premières DCI sont des DCI communes à un ou plusieurs terminaux.

4. Procédé de communication radio pour un terminal (20), comprenant :
la réception de premières informations de commande de liaison descendante, DCI, incluant une indication d'annulation sur une transmission par canal physique partagé de liaison montante, PUSCH, et des secondes DCI incluant un paramètre indiquant une priorité de la transmission par PUSCH ; et
la commande de l'annulation de la transmission par PUSCH, sur la base de la priorité indiquée par le paramètre et une ressource de domaine temporel et une ressource de domaine fréquentiel indiquées par l'indication d'annulation.

5. Station de base (10) comprenant :
une section (120) de transmission configurée pour transmettre des premières informations de commande de liaison descendante, DCI, incluant une indication d'annulation sur une transmission par canal physique partagé de liaison montante, PUSCH, et des secondes DCI incluant un paramètre indiquant une priorité de la transmission par PUSCH ; et
une section (110) de commande configurée pour commander de ne pas recevoir le PUSCH, sur la base de la priorité indiquée par le paramètre et une ressource de domaine temporel et une ressource de domaine fréquentiel indiquées par l'indication d'annulation.

6. Système comprenant un terminal (20) et une station de base (10), dans lequel
le terminal (20) comprend :
une section (220) de réception configurée pour recevoir des premières informations de commande de liaison descendante, DCI incluant une indication d'annulation sur une transmission par canal physique partagé de liaison montante, PUSCH, et des secondes DCI incluant un paramètre indiquant une priorité de la transmission par PUSCH ; et
une section (210) de commande configurée pour commander l'annulation de la transmission par PUSCH, sur la base de la priorité indiquée par le paramètre et une ressource de domaine temporel et une ressource de domaine fréquentiel indiquées par l'indication d'annulation, et
la station de base (10) comprend :
une section (120) de transmission configurée pour transmettre les premières DCI et les secondes DCI ; et
une section (110) de commande configurée pour commander de ne pas recevoir le PUSCH, sur la base de la priorité indiquée par le paramètre et la ressource de domaine temporel et la ressource de domaine fréquentiel indiquées par l'indication d'annulation.
